# EUROPEAN PATENT APPLICATION

(11) **EP 2 048 164 A2**
(43) Date of publication of application: **15.04.2009**
(21) Application number: 08165030.1
(22) Date of filing: 24.09.2008
(51) Int. Cl.: C08C 19/02, C08C 2/04, C08F 8/04, C08F 6/08

(54) **Process for the preparation of a hydrogenated conjugated diene-based polymer**

(30) Priority: 08.10.2007 KR 20070101126
(71) Applicant: Korea Kumho Petrochemical Co., Ltd., Jongno-gu Seoul 110-713 (KR)
(72) Inventor: Ko, Young Hoon, 305-810, Daejeon (KR); Kim, Hoo Chae, 305-720, Daejeon (KR); Kwon, Min Sung, 305-720, Daejeon (KR)
(74) Representative: Charrier, Rapp & Liebau

(57) **Abstract**

The present invention relates to a process for the preparation of a hydrogenated conjugated diene-based polymer comprising effectively removing the residues including the titanium-based catalyst, a reducing agent, etc., remaining in the conjugated diene-based polymer solution after hydrogenation by extraction from an aqueous layer through separation using an organic acid, alcohol and water.

## Description

### [Technical Field]

The present invention relates to a process for the preparation of a hydrogenated conjugated diene-based polymer comprising effectively removing the organotitanium catalyst residue remaining in the conjugated diene-based polymer solution after hydrogenation by extraction from an aqueous layer using an organic acid, alcohol and water.

### [Background Art]

Polymers of conjugated dienes such as 1,3-butadiene and isoprene, and copolymers of conjugated dienes and copolymerizable vinyl aromatic monomers such as styrene are widely used as elastomers.

Such block copolymers of conjugated dienes and vinyl aromatic monomers are used as modifier of transparent impact-resistant resin or polyolefin and polystyrene resin as non-vulcanized thermoplastic elastomers. However, polymers having olefinically unsaturated double bonds are used only in limited environments without being exposed to sunlight or high temperature because the highly reactive double bonds result in such stability problems as heat resistance, oxidation resistance, weather resistance, and so forth. In order to improve endurance and oxidation resistance of the polymers by overcoming this problem, the double bonds of the polymers are saturated partly or completely by addition of hydrogen.

A number of methods have been reported with regard to the hydrogenation of polymers having olefinic double bonds, which can be largely grouped into the following two categories: 1) using a heterogeneous metal-supported catalyst in which a precious metal catalyst such as platinum, palladium, rhodium, etc., is supported on a support such as carbon, silica and alumina; and 2) using a homogeneous catalyst such as a Ziegler catalyst using nickel or cobalt or an organometal compound of rhodium, titanium, etc.

Hydrogenation using a heterogeneous catalyst is usually performed under the condition of high temperature and high pressure and, after the reaction, the expensive catalyst has to be collected using a filter for reuse. Further, the cost of furnishing the reaction facility is high. In contrast, when a homogeneous catalyst is used, hydrogenation can be attained with good yield even with a smaller amount and under a milder condition, that is, at low temperature and low pressure, due to high catalytic activity. Also, the cost of reaction facility is low. But, there remains a problem that it is difficult to separate the homogeneous catalyst from the product after the reaction is completed.

A lot of hydrogenation techniques using homogeneous catalysts are known. For example, US Patent Nos. 3,494,942, 3,670,054, 3,700,633, etc., employ a catalyst comprising a Group VIII metal, particularly a nickel or cobalt compound, and an adequate reducing agent such as an aluminum alkyl compound. US Patent Nos. 4,501,857, 4,673,714, 4,980,421, 5,039,755, 5,583,185 and 6,040,390 disclose that the unsaturated double bonds of a conjugated diene polymer can be hydrogenated using a bis(cyclopentadienyl)titanium compound as the main catalyst. And, US Patent Nos. 5,753,778, 5,910,566, 5,994,477, 6,020,439, 6,040,390, 6,410,657 and 6,951,906 and WO 00 08,069 propose hydrogenation of a conjugated diene polymer using a monocyclopentadienyltitanium compound.

Although the homogeneous catalysts provide high hydrogenation yield and good reproducibility even with a small quantity, in general, the metal catalyst residue remains in the polymer solution after the hydrogenation is completed. The metal component may lead to the decomposition of the polymer by reacting with air, UV, etc., or discoloration of the final polymer product, thereby decreasing the product value. Therefore, the metal catalyst residue has to be removed. In general, a preferable content of the metal in the final polymer is not more than 20 ppm. Since the homogeneous catalyst residue is not easily removed by physical separation such as filtration, a chemical reaction is required for the removal.

To remove the organometal catalyst residue remaining in the polymer solution after the hydrogenation is finished, vigorous stirring, heating, and so forth is required. Conventionally, such strong acid as hydrochloric acid or sulfuric acid was used to remove the metal. However, they are very corrosive and may damage the reactor or other apparatuses.

A variety of methods have been proposed to solve this problem. For example, US Patent No. 3,780,138 discloses a process of extracting with dilute citric acid. But, this process requires a large quantity of extracting solution. Further, the extraction time is very long and phase separation does not occur effectively. In US Patent No. 4,595,749, a Group VIII metal catalyst including nickel is removed by chelating the catalyst with dicarboxylic acid and oxygen or a peroxide such as hydrogen peroxide (H₂O₂). In US Patent No. 5,104,972, such oxidized metals are removed by contacting the catalyst with a silicate. US Patent No. 5,089,541 removes a nickel catalyst by reacting the catalyst with oxygen and then contacting with activated carbon. In US Patent No. 3,531,448, a nickel catalyst is removed using ammonium phosphate. US Patent No. 5,242,961 discloses a process of hydrogenating a polymer with a bis(cyclopentadienyl)titanium compound, contacting the polymer with water, a peroxide or an alcohol and adding a non-phenolic antioxidant to the polymer in order to prevent discoloration of the hydrogenated polymer. However, the titanium compound is not completely removed. And, US Patent No. 6,465,609 discloses a process of removing the residual catalyst using hydrochloric acid and alcohol from a polymer hydrogenated using a bis(cyclopentadienyl)titanium compound. However, the apparatuses and equipments used in the process should be made of expensive materials having acid resistance because strong acid is used in the process.

### [Disclosure]

### [Technical Problem]

A feature of the present invention is to maintain the content of metals such as titanium and lithium included in the final copolymer, in the preparation of a hydrogenated conjugated diene-based polymer, to be no more than 20 ppm in order to solve the quality problems such as decomposition of the copolymer by the titanium-based catalyst or the lithium-based initiator used for the preparation, discoloration of the copolymer, and so forth.

### [Technical Solution]

The present invention relates to a process for the preparation of a hydrogenated conjugated diene-based polymer comprising preparing a hydrogenated conjugated diene-based polymer solution by hydrogenating a conjugated diene-based polymer in the presence of a titanium-based catalyst; and mixing the hydrogenated conjugated diene-based polymer solution with an acid compound selected from oxalic acid and an a-hydroxycarboxylic acid-based compound expressed by the formula (1) below, alcohol and water, performing phase separation and collecting the hydrogenated conjugated diene-based polymer from the organic layer: 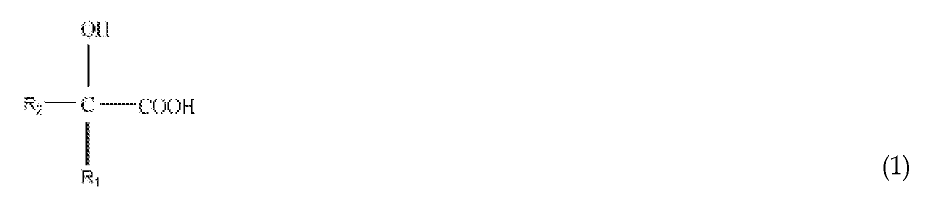 wherein each of R₁ and R₂ is hydrogen or C₁-C₅ alkyl.

### [Advantageous Effects]

The present invention provides a process for the hydrogenation of unsaturated double bonds of a conjugated diene polymer using a titanium-based catalyst, a reducing agent, etc., wherein the residues of the organotitanium compound, lithium salt, etc., remaining in the conjugated diene polymer solution are effectively removed by phase separation using a specific organic acid, alcohol and water. As a result, the copolymer does not undergo decomposition or discoloration, which may be caused by the residues. When compared with the conventional methods, a less amount of acid is used than the hydrochloric acid or sulfuric acid system and it becomes possible to use less expensive equipments because the apparatuses and mixers made of common-grade stainless steel can be utilized. In addition, because the metal salt chelated by the organic acid can be easily extracted to the aqueous solution by the use of alcohol, the time required for precipitation, phase separation, etc., can be reduced.

### [Best Mode]

The present invention relates to a process for the preparation of a hydrogenated conjugated diene-based polymer by performing hydrogenation of a conjugated diene-based polymer using a titanium-based catalyst, a lithium-based initiator, a reducing agent, etc., wherein, in the preparation of a hydrogenated conjugated diene-based polymer solution, the residues of the titanium-based catalyst, lithium-based initiator, reducing agent, etc., included in the polymer solution are removed effectively. These residues are metal components which may affect the color or physical properties of the final product, even in small quantity. According to the present invention, chelate compounds are formed by reacting the residues with a specific organic acid and are extracted to the aqueous layer from the polymer solution produced by dissolving in alcohol. Therefore, the metal components remaining in the hydrogenated conjugated diene-based polymer are removed effectively.

Hereinafter, a detailed description of the process for the preparation of a hydrogenated conjugated diene-based polymer according to the present invention will be given.

First, hydrogenation of a conjugated diene-based polymer is performed in the presence of a titanium-based catalyst to prepare a hydrogenated conjugated diene-based polymer solution.

The conjugated diene-based polymer may be one commonly used in the art and is not particularly limited. Specifically, a conjugated diene homopolymer or a random, tapered or block copolymer of a conjugated diene and a vinyl aromatic monomer, having a molecular weight from 500 to 1,000,000, can be used. The addition of hydrogen is possible only to the unsaturated double bonds of the conjugated diene unit. In general, a conjugated diene-based polymer is polymerized anionically. Preferably, the conjugated diene monomer available is a conjugated diene-based compound having 4 to 12 carbons, such as 1,3-butadiene, isoprene, piperylene, phenylbutadiene, 3,4-dimethyl-1,3-hexadiene, 4,5-diethyl-1,3-octadiene, etc., preferably 1,3-butadiene or isoprene. Preferably, the vinyl aromatic monomer copolymerizable with the conjugated diene monomer may be a vinyl aryl compound, such as styrene, a-methylstyrene, alkoxy-substituted styrene, 2-vinylpyridine, 4-vinylpyridine, vinylnaphthalene, alkyl-substituted vinylnaphthalene, etc., preferably styrene or α-methylstyrene.

When a copolymer is prepared from a conjugated diene monomer and a vinyl aromatic monomer, the weight proportion of them may be from 0.5 : 9.5 to 9.5 : 0.5. When the weight proportion of the conjugated diene is less than 0.5, impact resistance decreases. And, when the weight proportion of the conjugated diene exceeds 9.5, product processability is not good. Hence, the aforesaid range is preferable.

The conjugated diene-based polymer is polymerized by the methods commonly utilized in the related art. In the present invention, anionic polymerization is performed using an organolithium compound as initiator and thus-obtained living polymer is hydrogenated to prepare the hydrogenated conjugated diene-based polymer.

The catalyst used in the hydrogenation may be one commonly used in the related art without limitation. Specifically, a monocyclopentadienyltitanium-based compound or a bis(cyclopentadienyl)titanium-based compound may be used. The catalyst may be used as mixed with a reducing agent or alone without the reducing agent.

Examples of the cyclopentadienyltitanium compound that can be used as the catalyst include a cyclopentadienyltitanium halide compound, a cyclopentadienyl(alkoxy)titanium dihalide compound, a bis(cyclopentadienyl)titanium dihalide compound, a bis(cyclopentadienyl)titanium dialkyl compound, a bis(cyclopentadienyl)titanium diaryl compound and a bis(cyclopentadienyl)titanium dialkoxy compound. The cyclopentadienyltitanium compound can be used alone or in combination.

In the present invention, the hydrogenation/polymerization is performed based on the method disclosed in WO 00 08069. Alternatively, the titanium catalyst systems disclosed in US Patent Nos. 4,501,857, 4,673,714, 4,980,421, 5,753,778, 5,910,566 and 6,020,439 can be utilized.

The reducing agent that can be used along with the titanium catalyst may be one commonly utilized in the related art and is not particularly limited. Specifically, a variety of alkali metal compounds, including an alkyl aluminum compound, an alkyl magnesium compound, an organolithium compound, an alkali metal hydride, etc., can be used. The proportion with the titanium catalyst can be readily determined by one of ordinary skill in the art and is not particularly limited. Preferably, when an alkali metal hydride is used as the reducing agent, the reducing agent is used 4 to 30 mols per 1 mol of the titanium catalyst.

Preferably, the titanium-based catalyst is used in an amount of 0.05 to 5 mmol per 100 g of the conjugated diene-based polymer, more preferably in an amount of 0.01 to 20 mmol per 100 g of the polymer. When the used amount of the catalyst is below 0.01 mmol, productivity is not good because of slow hydrogenation. And, the use of the catalyst in an amount exceeding 20 mmol is economically unfavorable and requires the use of excessive chemicals to remove the catalyst after the reaction is completed. Hence, the aforesaid range is preferable.

The hydrogenation is performed by anionic polymerization using an initiator. The initiator may be one commonly utilized in the related art and is not particularly limited. Specifically, an organolithium compound such as *n*-butyllithium, *s*-butyllithium, etc., may be used. The amount of the initiator may be readily controlled depending on the wanted molecular weight of the polymer, as practiced in the art.

The hydrogenation is performed in an inert solvent. As used herein, the inert solvent means a solvent which does not react with any reactant during the polymerization or hydrogenation. Specifically, an aliphatic hydrocarbon such as *n*-pentane, *n*-hexane, *n*-heptane, *n*-octane, etc.; an alicyclic hydrocarbon such as cyclopentane, cyclohexane and cycloheptane; and an ether such as diethyl ether and tetrahydrofuran may be used alone or in combination. The concentration of the conjugated diene-based polymer in the solvent is maintained at 1 to 50 wt %, preferably at 5 to 25 wt %.

The hydrogenation is performed by maintaining the polymer solution at a constant temperature under an inert gas atmosphere of hydrogen, helium, argon or nitrogen, adding a hydrogenation catalyst with or without agitation and then injecting hydrogen gas at a specific pressure. The hydrogenation is performed at a temperature range from 50 to 140 °C and a pressure range from 2 to 30 kg/cm².

When the temperature is below 50 °C, a good reaction yield is not attained because of decreased reactivity. And, when the temperature exceeds 140 °C, side reactions may occur due to the thermal aging of the polymer. And, if the pressure is below 2 kg/cm², a long duration of time is required because the reaction rate decreases significantly. And, a pressure exceeding 30 kg/cm² is economically unfavorable because an expensive reactor has to be used. Hence, the aforesaid range is preferable.

In order to remove the titanium metal and lithium salt remaining in the conjugated diene-based polymer solution after the hydrogenation is completed, a solution prepared by mixing an acid compound selected from oxalic acid and an α-hydroxycarboxylic acid-based compound expressed by the formula (1) with alcohol or water is added to the hydrogenated conjugated diene-based polymer solution and, after vigorous mixing, a predetermined amount of water is added with or without separating the alcohol layer, so that an aqueous layer is separated from the polymer solution layer. Then, the titanium metal is separated from the aqueous layer by extraction.

When selecting a suitable reagent for removing the metal residues from the hydrogenated conjugated diene-based polymer, the reagent should not react with the polymer or the polymer solution. Further, the chelate compound resulting from the binding with the catalyst component should be insoluble in various pH ranges in the organic solvent.

The aforesaid α-hydroxycarboxylic acid is an organic acid expressed by the formula (1). Specifically, it may be glycolic acid, lactic acid, 2-hydroxybutyric acid, 2-hydroxy-3-methylpropionic acid, 2-hydroxy-2-methylbutyric acid, 2-hydroxy-3methylbutyric acid, etc. Preferably, glycolic acid, lactic acid or 2-hydroxy-3methylpropionic acid may be used. 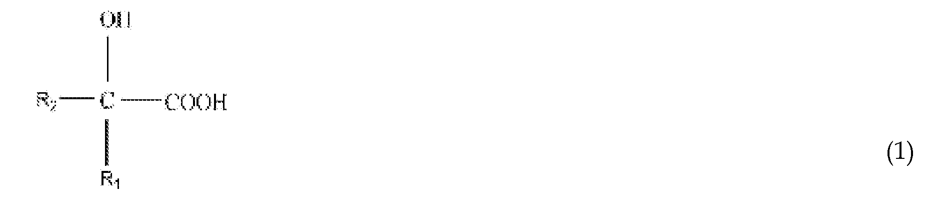 In the formula (1), each of R₁ and R₂ is hydrogen or C₁-C₅ alkyl.

Preferably, the oxalic acid or α-hydroxycarboxylic acid is used 0.5 to 50.0 mols, more preferably in 0.5 to 1.0 moles per 1 mol of the titanium-based catalyst. If the acid is used in excess of 50 mols, the cost of wastewater treatment increases. Meanwhile, if the acid is used less than 0.5 mol, the metal salt cannot be removed effectively.

The oxalic acid or α-hydroxycarboxylic acid-based compound may be used in itself or after being diluted. For effective mixing in the hydrogenated polymer solution, it is preferable to dilute the oxalic acid or α-hydroxycarboxylic acid-based compound moderately, preferably using alcohol or water. Preferably, the concentration of the diluted oxalic acid or α-hydroxycarboxylic acid-based compound is maintained at 0.1 to 85 wt %, more preferably at 0.5 to 50 wt %. When the concentration of the diluted acid is below 0.1 wt %, the catalyst is not removed effectively and may remain in the final polymer. And, when the concentration of the diluted acid exceeds 85 wt %, mixing is not performed satisfactorily because of insufficient solubility. Hence, the aforesaid range is preferable. Specific examples of the alcohol that can be used for the dilution include methanol, ethanol, isopropanol, butanol, 2-ethyl-1-hexanol, etc. Preferably, methanol, ethanol or isopropanol is used.

In accordance with the present invention, phase separation is performed using alcohol and water. 1 to 20 volume equivalents, preferably 2 to 10 volume equivalents, of the conjugated diene-based polymer solution is phase-separated based on the volume of the alcohol including the oxalic acid or α-hydroxycarboxylic acid. When the amount of the polymer is less than 1 volume equivalent, the polymer becomes separated in the solution and, thus, cannot be transferred to the following process. And, when the amount of the polymer exceeds 20 volume equivalents, it is difficult to remove the catalyst from the polymer solution. Hence, the aforesaid range is preferable.

The alcohol including the oxalic acid or α-hydroxycarboxylic acid-based compound and the conjugated diene-based polymer solution are mixed with water with or without the separation of the alcohol layer. And, the alcohol and the titanium metal compound are separated from the aqueous layer by extraction. Preferably, 1 to 10 volume equivalents, more preferably 2 to 5 volume equivalents, of the polymer mixture is used based on the volume of the water. If the amount of the polymer mixture is less than 1 volume equivalent, the cost of solidifying the polymer in the following process will increase. Meanwhile, if the amount of the polymer mixture exceeds 10 volume equivalents, the catalyst cannot be removed effectively because of insufficient phase separation. Hence, the aforesaid range is preferable.

The mixing of the acid compound selected from oxalic acid and the α-hydroxycarboxylic acid-based compound expressed by the formula (1), the conjugated diene-based polymer, alcohol and water for phase separation is performed at a temperature of 50 to 120 °C, preferably 50 to 90 °C, at a pressure of 0.1 to 20 atm, preferably 0.5 to 5 atm. The contact time may be dependent on the type or efficiency of the stirrer. Preferably, stirring is performed for 0.01 to 10 hours.

When the temperature is below 50 °C, the solution becomes viscous, thereby resulting in insufficient mixing and decreased catalyst removal efficiency. And, when the temperature exceeds 120 °C, the catalyst removal efficiency may decrease because of the solvent vapor pressure. Hence, the aforesaid range is preferable. And, when the pressure is below 0.1 atm, the catalyst removal efficiency may decrease because of the solvent vapor pressure. And, when the pressure exceeds 20 atm, an expensive apparatus is required. Hence, the aforesaid range is preferable.

The separation of the alcohol-polymer mixture solution or the separation of the polymer solution from water may be performed with a decanter separator using specific gravity difference, a centrifuge or a counter-current extractor.

The yielded hydrogenated conjugated diene-based polymer contains less than 20 ppm, preferably 1 to 20 ppm, of the polymer as impurities and, therefore, the final polymer exhibits very superior color.

The following examples are put forth so as to provide those of ordinary skill in the art with a complete disclosure and description of the present invention and are intended to be purely exemplary of the invention and are not intended to limit the scope of the invention.

### Preparation Examples: Synthesis of conjugated diene-based copolymers

### Preparation Example 1: Styrene-butadiene-styrene type living block copolymer

4800 g of cyclohexane, 9.6 g of tetrahydrofuran and 116 g of styrene monomer were added to a 10 L autoclave reactor. After adjusting temperature to 40 °C, 12.5 mmol of n-butyllithium was injected and polymerization was carried out for 30 minutes adiabatically. Subsequently, 568 g of 1,3-butadiene monomer was injected and polymerization was carried out for 1 hour. Next, 116 g of styrene monomer was added and polymerization was carried out for 30 minutes. The obtained copolymer solution was deactivated by adding 12.5 mmol of 2,6-di-t-butyl-4-methylphenol.

The prepared copolymer was a styrene-butadiene-styrene type living block copolymer having a bound styrene content of 30 %, a 1,2-vinyl bond content of 39 % in the butadiene units and a number-average molecular weight (Mₙ) of 62,000.

### Preparation Example 2: Styrene-butadiene-styrene type living block copolymer

4800 g of cyclohexane, 9.6 g of tetrahydrofuran and 116 g of styrene monomer were added to a 10 L autoclave reactor. After adjusting temperature to 40 °C, 19 mmol of n-butyllithium was injected and polymerization was carried out for 30 minutes adiabatically. Subsequently, 568 g of 1,3-butadiene monomer was injected and polymerization was carried out for 1 hour. Next, 116 g of styrene monomer was added and polymerization was carried out for 30 minutes. The obtained copolymer solution was deactivated by adding 19 mmol of 2,6-di-t-butyl-4-methylphenol.

The prepared copolymer was a styrene-butadiene-styrene type living block copolymer having a bound styrene content of 29.4 %, a 1,2-vinyl bond content of 40 % in the butadiene units and a number-average molecular weight (Mₙ) of 45,000.

### Preparation Example 3: Styrene-butadiene radial block copolymer

4800 g of cyclohexane, 9.6 g of tetrahydrofuran and 240 g of styrene monomer were added to a 10 L autoclave reactor. After adjusting temperature to 40 °C, 19 mmol of n-butyllithium was injected and polymerization was carried out for 30 minutes adiabatically. Subsequently, 560 g of 1,3-butadiene monomer was injected and polymerization was carried out for 1 hour. Next, 4.5 mmol of silicon tetrachloride was added and polymerization was carried out for 30 minutes.

The prepared copolymer was a styrene-butadiene radial block copolymer having a bound styrene content of 30 %, a 1,2-vinyl bond content of 40 % in the butadiene units, a coupling efficiency (CE) of 90 % and a number-average molecular weight (Mₙ) of 158,000.

### Preparation Example 4: Butadiene homopolymer

4800 g of cyclohexane, 9.6 g of tetrahydrofuran and 800 g of butadiene monomer were added to a 10 L autoclave reactor. After adjusting temperature to 40 °C, 12.5 mmol of n-butyllithium was injected and polymerization was carried out for 1 hour adiabatically. Next, the obtained copolymer solution was deactivated by adding 12.5 mmol of 2,6-di-t-butyl-4-methylphenol.

The prepared polymer was a butadiene homopolymer having a 1,2-vinyl bond content of 39 % in the butadiene units and a number-average molecular weight (Mₙ) of 60,000.

### Examples: Hydrogenated conjugated diene-based polymers

### Example 1

2800 g of the polystyrene-polybutadiene-polystyrene triblock copolymer solution prepared in Preparation Example 1 was added to a 5 L autoclave reactor and heated to 60 °C. Subsequently, 0.096 g (12 mmol) of lithium hydride was added to the polymer solution in the autoclave reactor, 0.49 g (1.2 mmol) of cyclopentadienyl(2,6-di-t-butyl-4-methylphenoxy)titanium dichloride was added and hydrogenation was carried out under a hydrogen pressure of 10 kg/cm². NMR analysis of the prepared hydrogenated copolymer confirmed that 97 % of the double bonds in the polybutadiene block were saturated, whereas the polystyrene block was not saturated at all.

Following the hydrogenation, 2.5 g of lactic acid (85 % aqueous solution) and 600 mL of isopropanol were added to the copolymer solution at 90 °C and stirred vigorously for 30 minutes. The mixture solution was allowed to stand for over 12 hours until the polymer solution layer and the alcohol layer were separated. After removing the alcohol layer, water with a volume of 1/4 of the polymer solution was added. After stirring for 10 minutes, the solution was allowed to stand for 1 hour. The aqueous layer was separated and removed. After washing, solid polymer was obtained from the polymer solution by steam stripping and dried on a roll mill.

### Example 2

Hydrogenation was carried out according to the method described in Example 1, using the polystyrene-polybutadiene-polystyrene triblock copolymer solution prepared in Preparation Example 1, 0.3 g of bis(cyclopentadienyl)titanium dichloride and 0.096 g (12 mmol) of lithium hydride. NMR analysis of the prepared hydrogenated copolymer confirmed that 98 % of the double bonds in the polybutadiene block were saturated, whereas the polystyrene block was not saturated at all.

Following the hydrogenation, phase separation was carried out at 90 °C using 2.2 g of oxalic acid and 600 mL of isopropanol, followed by washing and drying.

### Example 3

Hydrogenation was carried out according to the method described in Example 1, using the polystyrene-polybutadiene-polystyrene triblock copolymer solution prepared in Preparation Example 1, 0.3 g of bis(cyclopentadienyl)titanium dichloride and 0.096 g (12 mmol) of lithium hydride. NMR analysis of the prepared hydrogenated copolymer confirmed that 98 % of the double bonds in the polybutadiene block were saturated, whereas the polystyrene block was not saturated at all.

Following the hydrogenation, phase separation was carried out at 90 °C using 3 g of glycolic acid and 600 mL of isopropanol, followed by washing and drying.

### Example 4

Hydrogenation was carried out according to the method described in Example 1, using the polystyrene-polybutadiene-polystyrene triblock copolymer solution prepared in Preparation Example 2, 0.3 g of bis(cyclopentadienyl)titanium dichloride and 0.096 g (12 mmol) of lithium hydride. NMR analysis of the prepared hydrogenated copolymer confirmed that 98 % of the double bonds in the polybutadiene block were saturated, whereas the polystyrene block was not saturated at all.

Following the hydrogenation, phase separation was carried out at 90 °C using 3 g of 2-hydroxy-3-methylpropionic acid and 600 mL of isopropanol, followed by washing and drying.

### Experimental Example 1

The polymers obtained in Examples 1 to 4 were analyzed by inductively coupled plasma (ICP). The titanium content of the polymers is reported in Table 1 below.

**[Table 1]**

| | Organic Acid | Titanium Content (ppm) | |
|---|---|---|---|
| | | Before phase separation | After phase separation |
| Example 1 | Lactic acid | 144 | 8 |
| Example 2 | Oxalic acid | 151 | 5 |
| Example 3 | Glycolic acid | 151 | 6 |
| Example 4 | 2-Hydroxy-3-methylpropionic acid | 151 | 7 |

### Example 5

Hydrogenation was carried using the polystyrene-polybutadiene-polystyrene block copolymer solution prepared in Preparation Example 2, 0.3 g of bis(cyclopentadienyl)titanium dichloride and 0.096 g (12 mmol) of lithium hydride. NMR analysis of the prepared hydrogenated copolymer confirmed that 98 % of the double bonds in the polybutadiene block were saturated. Subsequently, phase separation was carried out using mixture solutions of lactic acid (85 wt % aqueous solution) and isopropanol as given in Table 2 below, with the volume proportion of methanol and the hydrogenated polymer solution maintained at 1 : 6. Then, the polymer solutions were steam stripped and dried on a roll mill.

After drying, samples were taken from the polymers and analyzed by inductively coupled plasma (ICP). The titanium content of the polymers is reported in Table 2.

**[Table 2]**

| Lactic Acid : Isopropanol (weight proportion) | Titanium Content Before Phase Separation (ppm) | Titanium Content After Phase Separation (ppm) |
|---|---|---|
| 0.5 : 1 | 144 | 8 |
| 1: 1 | | 4 |
| 4:1 | | 4 |

### Example 6

Hydrogenation was carried according to the method described in Example 1, using the polystyrene-polybutadiene-polystyrene block copolymer solution prepared in Preparation Example 2, 0.3 g of bis(cyclopentadienyl)titanium dichloride and 0.096 g (12 mmol) of lithium hydride.

Subsequently, after adding 2.2 g of oxalic acid and 400 mL of methanol and stirring for 30 minutes, water (1/2, 1/4 and 1/9 volume equivalents of the copolymer mixture solution) was added as given in Table 3 without separating the alcohol layer. After stirring for 10 minutes, the solutions were allowed to stand for 30 minutes. The aqueous layers including the alcohol were separated and the copolymer solutions were collected, steam stripped and dried on a roll mill.

After drying, samples were taken from the polymers and analyzed by inductively coupled plasma (ICP). The titanium content of the polymers is reported in Table 3.

**[Table 3]**

| | Copolymers | Before Phase Separation | After Phase Separation | | |
|---|---|---|---|---|---|
| | | | Water added to Copolymers (volume equivalents) | | |
| | | | 1/2 | 1/4 | 1/9 |
| Titanium Content (ppm) | Preparation Example 2 | 144 | 4 | 4 | 8 |

### Example 7

Hydrogenation was carried according to the method described in Example 1, using the polystyrene-polybutadiene radial copolymer prepared in Preparation Example 3, 0.3 g of bis(cyclopentadienyl)titanium dichloride and 0.096 g (12 mmol) of lithium hydride. NMR analysis of the prepared hydrogenated copolymer confirmed that 97 % of the double bonds in the polybutadiene block were saturated.

Following the hydrogenation, 2.2 g of oxalic acid and 600 mL of methanol solution were added to the copolymer solution at 50 °C. After stirring for 30 minutes and allowing to stand, the aqueous layer including the alcohol was separated and the copolymer solution was collected, steam stripped and dried on a roll mill.

After drying, sample were taken from the polymer and analyzed by inductively coupled plasma (ICP). The titanium and lithium contents of the polymers are reported in Table 4 below.

### Example 8

Hydrogenation was carried according to the method described in Example 1, using the butadiene homopolymer prepared in Preparation Example 4, 0.3 g of bis(cyclopentadienyl)titanium dichloride and 0.096 g (12 mmol) of lithium hydride. NMR analysis of the prepared hydrogenated copolymer confirmed that 97 % of the double bonds in the polybutadiene block were saturated.

Following the hydrogenation, 4 g of lactic acid (85 % aqueous solution) and 600 mL of methanol solution were added to the copolymer solution at 50 °C. After stirring for 30 minutes, it was allowed to stand, and the aqueous layer including the alcohol was separated. Then, the copolymer solution was collected, steam stripped and dried on a roll mill.

After drying, samples were taken from the polymer and analyzed by inductively coupled plasma (ICP). The titanium and lithium contents of the polymers are reported in Table 4.

**[Table 4]**

| | Copolymers | Organic Acids | Titanium Content (ppm) After | | Lithium Content (ppm) After | |
|---|---|---|---|---|---|---|
| | | | Before phase separation | phase separation | Before phase separation | phase separation |
| Example 7 | Preparation Example 3 | Oxalic acid | 155 | 8 | 385 | 5 |
| Example 8 | Preparation Example 4 | Lactic acid | 155 | 7 | 385 | 6 |

It will be apparent to those skilled in the art that various modifications and variations can be made in the present invention without departing from the sprit or scope of the invention. Other embodiments of the invention will be apparent to those skilled in the art from consideration of the specification and practice of the invention disclosed herein. It is intended that the specification and examples be considered as exemplary only, with a true sprit and scope of the invention being indicated by the following examples.

## Claims

1. A process for the preparation of a hydrogenated conjugated diene-based polymer comprising:
preparing a hydrogenated conjugated diene-based polymer solution by hydrogenating a conjugated diene-based polymer in the presence of a titanium-based catalyst; and
mixing the hydrogenated conjugated diene-based polymer solution with an acid compound selected from oxalic acid and an α-hydroxycarboxylic acid-based compound expressed by the formula (1) below, alcohol and water, performing phase separation and collecting the hydrogenated conjugated diene-based polymer from the organic layer: 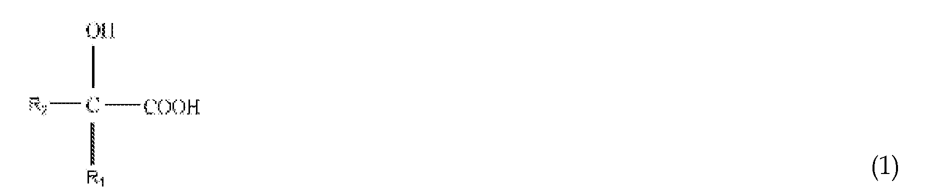
wherein each of R₁ and R₂ is hydrogen or C₁-C₅ alkyl.

2. The preparation process as claimed in claim 1, wherein the conjugated diene-based polymer is a conjugated diene homopolymer or a random, tapered or block copolymer of a conjugated diene monomer and a vinyl aromatic monomer.

3. The preparation process as claimed in claim 1, wherein the separated and collected hydrogenated conjugated diene-based polymer contains 1 to 20 ppm of the titanium-based catalyst as impurities.

4. The preparation process as claimed in claim 1, wherein the α-hydroxycarboxylic acid-based compound expressed by the formula (1) is a compound selected from glycolic acid, lactic acid, 2-hydroxybutyric acid, 2-hydroxy-3-methylpropionic acid, 2-hydroxy-2-methylbutyric acid and 2-hydroxy-3-methylbutyric acid or a mixture thereof.

5. The preparation process as claimed in claim 1, wherein the acid compound is used in an amount of 0.5 to 10 mols per 1 mol of the titanium-based catalyst.

6. The preparation process as claimed in claim 1 or 5, wherein the acid compound is used as dissolved in alcohol or an aqueous solution.

7. The preparation process as claimed in claim 1, wherein the volume proportion of the polymer solution to the alcohol including the oxalic acid or α-hydroxycarboxylic acid ranges from 1 : 1 to 20 : 1.

8. The preparation process as claimed in claim 1, wherein the volume proportion of the polymer solution to the water ranges from 1 : 1 to 10 : 1.

9. The preparation process as claimed in claim 1, wherein the mixing for phase separation is carried out at a temperature range from 50 °C to 120 °C and a pressure range from 0.1 atm to 20 atm.
